# EUROPÄISCHE PATENTANMELDUNG

(11) **EP 1 111 284 A1**
(43) Veröffentlichungstag der Anmeldung: **27.06.2001**
(21) Anmeldenummer: 00100982.8
(22) Anmeldetag: 19.01.2000
(51) Int. Cl.: F16K 35/02

(54) **PIN-index-Flaschenventil**

(30) Priorität: 16.12.1999 DE 19960590
(71) Anmelder: Messer Cutting & Welding AG, 64823 Gross-Umstadt (DE)
(72) Erfinder: Müller, Albrecht, 65812 Bad Soden (DE)
(74) Vertreter: Berdux, Klaus, Dipl.-Ing.

(57) **Zusammenfassung**

Das erfindungsgemäße PIN-index-Flaschenventil für Druckgasflaschen zeichnet sich dadurch aus, dass die Oberspindel (2) durch eine zwischen der Kopfschraube (1) und dem Handrad (3) angeordneten Druckfeder (4) mit dem Handrad (3) lösbar verbunden ist, wodurch eine wirksame und kostengünstige Sicherung gegen eine unbeabsichtigte Ventil-Betätigung gegeben ist.

## Beschreibung

Die Erfindung betrifft ein PIN-index-Flaschenventil für Gasdruckflaschen, nach den Merkmalen des Oberbegriffs von Anspruch 1.

Bei derartigen, den Anforderungen und Maßen der DIN EN 850 entsprechenden Flaschenventilen mit Bügelverschlüssen nach dem Pin-index-System für Gasflaschen, mit einem Ventilgehäuse, dessen axialer Gaskanal eine herkömmliche Unter-/Oberspindel-Anordnung aufweist, wobei die in einer mittleren Öffnung der Kopfschraube gleitend oder mittels eines Wälzlagers gelagerte Oberspindel mit einem Handrad form- und kraftschlüssig verbunden ist, besteht aufgrund der aus der Oberspindel-Lagerung resultierenden geringen Handrad-Betätigungsmomente, insbesondere bei geringem Flaschendruck, die Gefahr einer unbeabsichtigen Ventil-Betätigung.

Der Erfindung liegt die Aufgabe zugrunde, für derartige PIN-index-Flaschenventile einen wirksamen und kostengünstigen Schutz gegen eine unbeabsichtigte Ventil-Betätigung zu schaffen.

Gelöst wurde die Aufgabe durch ein PIN-index-Flaschenventil mit den Merkmalen von Anspruch 1.

Bei diesen erfindungsgemäßen PIN-index-Flaschenventilen für Gasdruckflaschen kann durch die zwischen der Kopfschraube und dem Handrad angeordnete Druckfeder das Handrad soweit axial verschoben werden bis zwischen dem Handrad-Innenvierkant und dem Oberspindel-Außenvierkant keine form- und kraftschlüssige Verbindung mehr besteht, wodurch eine unbeabsichtigte Ventil-Betätigung ausgeschlossen bzw. zumindestens erschwert ist.

Zur Ventil-Betätigung ist das Handrad gegen den Widerstand der Druckfeder axial soweit zu verschieben, bis der Handrad-Innenvierkant mit dem Oberspindel-Außenvierkant wieder form- und kraftschlüssig verbunden ist.

Zur optischen Anzeige des Ventil-Sicherungszustandes ist auf der Aussenoberfläche der Kopfschraube ein, aus einem Kunststoff oder einem Metall bestehender, farblich unterschiedlich gestaltbarer Indikatorring angeordnet.

Das PIN-index-Flaschenventil für Gasdruckflaschen mit der erfindungsgemäßen Druckfeder-Handrad-Sicherung gewährleistet einen wirksamen und kostengünstigen Schutz gegen eine unbeabsichtigte Ventil-Betätigung.

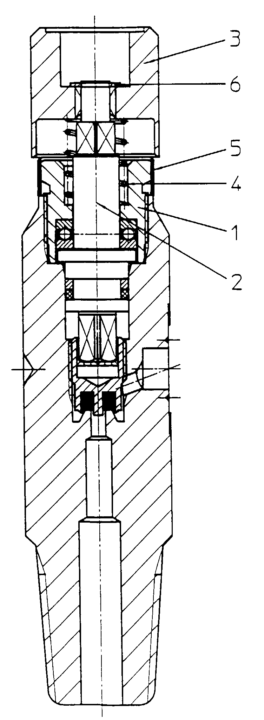

Im folgenden wird die Erfindung anhand der Zeichnung erläutert.

Die Figur der Zeichnung zeigt im Längsschnitt eine bevorzugte Ausführungsform eines PIN-index-Flaschenventils mit einem Ventilgehäuse, in dessen axialen Gaskanal eine mit einer Unterspindel angeordnete, auf herkömmliche Weise ausgebildete und in einer mittleren Öffnung einer Kopfschraube 1 mittels eines Kugellagers gelagerte Oberspindel 2 mit ihrem oberen Aussenvierkant mit einem unteren Innenvierkant eines axial verschiebbaren Handrads 3 form- und kraftschlüssig verbunden ist. Durch eine zwischen der Kopfschraube 1 und dem Handrad 3 angeordnete Druckfeder 4 kann das Handrad 3 zur Sicherung gegen eine unbeabsichtigte Ventil-Betätigung axial soweit verschoben werden bis zwischen dem Außenvierkant der Oberspindel 2 und dem Innenvierkant des Handrads 3 keine form- und kraftschlüssige Verbindung mehr besteht, wodurch eine Betätigung der Oberspindel 2 durch das Handrad 3 ausgeschlossen ist. Dieser Ventil-Sicherungszustand wird optisch durch einen auf der Aussenoberfläche der Kopfschraube 1 angeordneten, aus Kunstoff oder Metall bestehenden und farblich unterschiedlich gestaltbaren Indikatorring 5 angezeigt. Zur Ventil-Betätigung muss das mit einem Sicherungsring 6 versehene Handrad 3 gegen den Widerstand der Druckfeder 4 in Richtung zur Oberspindel 2 axial verschoben (niedergedrückt) werden, bis der Außenvierkant der Oberspindel 2 mit dem Innenvierkant des Handrads 3 form- und kraftschlüssig verbunden und damit die Betätigung der Oberspindel 2 durch ein axiales Drehen des Handrads 3 gewährleistet ist.

Bezugszeichen-Aufstellung
- 1: Kopfschraube
- 2: Oberspindel
- 3: Handrad
- 4: Druckfeder
- 5: Indikatorring
- 6: Sicherungsring

## Patentansprüche

1. PIN-index-Flaschenventil für Druckgasflaschen mit einer in einer Kopfschraube gleitend oder mittels eines Wälzlagers gelagerten und mit einem Handrad verbundenen Oberspindel,
dadurch gekennzeichnet,
dass die Oberspindel (2) durch eine zwischen der Kopfschraube (1) und dem Handrad (3) angeordneten Druckfeder (4) mit dem Handrad (3) lösbar verbunden ist.

2. PIN-index-Flaschenventil nach Anspruch 1,
dadurch gekennzeichnet,
dass zur optischen Anzeige des Ventil-Sicherungszustandes ein, aus einem Kunststoff oder einem Metall bestehender, farblich unterschiedlich gestaltbarer Indikatorring (5) auf der Aussenoberfläche der Kopfschraube (1) angeordnet ist.
